# EUROPÄISCHE PATENTSCHRIFT

(11) **EP 1 053 669 B1**
(45) Veröffentlichungstag und Bekanntmachung des Hinweises auf die Patenterteilung: **11.12.2002**
(21) Anmeldenummer: 00110466.0
(22) Anmeldetag: 17.05.2000
(51) Int. Cl.: A01D 34/64, B62D 21/12

(54) **Fahrzeug**
Vehicle
Véhicule

(30) Priorität: 21.05.1999 US 316759
(43) Veröffentlichungstag der Anmeldung: 22.11.2000
(73) Patentinhaber: DEERE & COMPANY, Moline, Illinois 61265-8098 (US)
(72) Erfinder: Brewer, Clay David, Willow Spring, NC 27592 (US)
(74) Vertreter: Magin, Ludwig Bernhard

(56) Entgegenhaltungen:
- EP-A- 0 262 285
- EP-A- 0 278 479
- US-A- 4 232 755
- US-A- 5 248 237

## Beschreibung

Die Erfindung betrifft ein landwirtschaftliches bzw. industrielles Fahrzeug oder ein Fahrzeug zur Rasen-, Gartenund Grundstückspflege mit einem Rahmen und zumindest einem an dem Rahmen vorgesehenen Paar vorzugsweise antreibbarer Räder, sowie mit einem Lager für wenigstens ein weiteres Rad bzw. eine Achseinheit.

Die EP-A2-0 278 479 zeigt einen Personenkraftwagen mit einem Rahmen, welcher sich zum Zweck der Vereinfachung der Wartung sowie des Ein- und Ausbaus von Bauteilen bzw. Baugruppen des Kraftfahrzeugs aus drei demontierbaren Einzelmodulen zusammensetzt.

Die US-A-4,232,755 offenbart ein batteriebetriebenes Motorfahrzeug mit einem teleskopisch verstellbaren Rahmen. Ein vorderer und ein rückwärtiger Bereich können für Reparaturarbeiten oder einen Austausch von Baugruppen verschoben werden.

In der EP-A1-0 262 285 wird ein Mähgerät offenbart, welches ein Frontmähwerk aufweist, das mit dem Mähgerät schwenkbar verbunden ist, um der Kontur des Untergrundes folgen zu können.

Bekannte kleine Fahrzeuge, die zur Pflege von Rasen- und Grünflächen verwendet werden, wie beispielsweise Mähgeräte mit vorn angebrachten Mäheinheiten, weisen einen Fahrzeugrahmen auf, an dem vordere und rückwärtige Achsen vorgesehen sind. Üblicherweise ist die rückwärtige Achse unterhalb des Rahmens angebracht, um eine Wartung und ein Entfernen der Achse zu erlauben, wenn Wartungsarbeiten und/oder ein Ersetzen notwendig ist. Durch die Anordnung der rückwärtigen Achse unterhalb des Fahrzeugrahmens, ist der Fahrzeugrahmen höher über dem Untergrund angeordnet, als wenn die Achse oberhalb des Rahmens angeordnet wäre. Da andere Fahrzeugbaugruppen, wie der Antrieb, auf dem Fahrzeugrahmen angeordnet sind, sind auch diese höher über dem Untergrund positioniert. Entsprechend wird der Schwerpunkt des Fahrzeugs bezogen auf den Untergrund durch die Position dieser Baugruppen bezogen auf den Untergrund bestimmt. Ein solches Fahrzeug wird beispielsweise in der US-A-5,459,984 gezeigt.

Kleine Fahrzeuge, wie solche Mähgeräte, werden üblicherweise unter einer Vielzahl von Untergrundbedingungen einschließlich hügeligem Gelände und an Hängen eingesetzt. Unter diesen Bedingungen ist ihre Stabilität von dem Abstand zwischen dem Untergrund und ihrem Schwerpunkt abhängig.

Die der Erfindung zugrunde liegende Aufgabe wird darin gesehen, die Stabilität bekannter Fahrzeuge zu verbessern.

Diese Aufgabe wird erfindungsgemäß durch die Lehre des Patentanspruchs 1 gelöst, wobei in den weiteren Patentansprüchen die Lösung in vorteilhafter Weise weiterentwickelnde Merkmale aufgeführt sind.

Auf diese Weise wird der Schwerpunkt des Fahrzeugs nach unten verlagert, da der Rahmen und damit an dem Rahmen angebrachte Baugruppen, wie eine Bedienerplattform oder ein Antrieb, mit einem geringeren Abstand zum Boden angeordnet werden können, da die Lagerung des Rades bzw. der Achseinheit oberhalb des Rahmens positioniert ist und dabei eine einfache Wartung bzw. Montage/Demontage der Achseinheit gewahrt bleibt, da diese durch den teilbaren Rahmen leicht zugänglich bleibt. Die vorliegende Erfindung kann an landwirtschaftlichen bzw. industriellen Fahrzeugen eingesetzt werden, bei denen es gewünscht wird, den Schwerpunkt des Fahrzeugs möglichst tief anzusetzen, um beispielsweise auf unebenem Gelände eine relativ hohe Stabilität zu erzielen. Vorzugsweise wird die Erfindung an Fahrzeugen zur Rasen-, Garten- und Grundstückspflege, deren Einsatzbereich häufig hügeliges Gelände oder auch Böschungen etc. umfaßt oder auch an anderen vorzugsweise kleinen Fahrzeugen, eingesetzt.

Eine stabile und einfache Ausführung des Rahmens ergibt sich, wenn die Rahmenbereiche vorzugsweise jeweils einen ersten und einen zweiten Rahmenteil aufweisen, die voneinander beabstandet sind und sich vorzugsweise zumindest im wesentlichen in Längsrichtung erstrecken. Zur Verbindung dieser Rahmenteile können eine oder mehrere Querstreben vorgesehen sein.

Die Rahmenbereiche bzw. die Rahmenteile können zumindest bereichsweise durch Hohlprofile, beispielsweise in der Art von Vierkantrohren etc., gebildet werden, die übliche Fertigungsmaterialien darstellen und damit günstig sind und darüber hinaus eine hohe Stabilität aufweisen.

Weisen/Weist zumindest einer der Rahmenbereiche bzw. seine Rahmenteile eine zumindest im wesentlichen flache und/oder sich zumindest im wesentlichen horizontal erstreckende Unterseite auf, so kann ein so ausgeführtes Fahrzeug leicht transportiert oder angehoben werden, indem es beispielsweise mittels der Gabel eines Gabelstaplers oder einer Hubplattform, die an der Rahmenunterseite angreifen, angehoben werden kann. Darüber hinaus kann die Unterseite die oberhalb derselben angeordneten Baugruppen vor Beschädigungen durch Hindernisse, die unter dem Fahrzeug hindurchgelangen, schützen.

Die Rahmenbereiche können in üblicher Weise beispielsweise durch verschraub- oder verklemmbare Flansche verbunden werden. Günstig, stabil und einfach zu montieren ist es aber, wenn die Rahmenbereiche Mittel zur teleskopischen Verbindung der Rahmenteile aufweisen. Auf diese Weise können die Mittel zusammengesteckt und verschoben werden, wodurch eine erste Verbindung entsteht, und im Anschluß fest gesichert werden, beispielsweise indem eine Schraubverbindung oder eine Verstiftung etc. vorgesehen ist.

Besonders einfach kann dies dadurch erfolgen, daß einer der Rahmenteile in dem anderen Rahmenteil aufgenommen werden kann. Diese Art der Verbindung bietet sich insbesondere bei der Verwendung eines Hohlprofils für wenigstens einen der Rahmenteile an, da dieses zur Aufnahme eines weiteren Rahmenteils besonders geeignet ist.

Das Rad bzw. die Achseinheit kann an dem Rahmen starr bzw. als Nachlaufrad vorgesehen sein. Besonders günstig ist es aber, eine pendelnd angelenkte Achseinheit vorzusehen, die der Kontur des Untergrundes folgen kann, und somit ein günstiges Fahrverhalten des Fahrzeugs bewirkt.

Eine pendelnde Lagerung kann in einfacher Weise erzielt werden, indem an einem der Rahmenbereiche ein Stift vorgesehen ist, der mit einer Aussparung in der Achseinheit zusammenwirkt, so daß diese um den Stift verschwenken kann.

Wird der Stift bei verbundenen Rahmenbereichen durch den ersten Rahmenbereich aufgenommen, so kann hierdurch die Achseinheit in einfacher Weise auf dem Stift gesichert werden. Es sind hierzu keine weiteren Befestigungsmittel nötig, da der erste und zweite Rahmenbereich miteinander verbunden werden. An dem ersten Rahmenbereich kann ein Anschlag vorgesehen sein, so daß eine Bewegung der Achseinheit in axialer Richtung unterbunden wird.

In der Zeichnung ist ein nachfolgend näher beschriebenes Ausführungsbeispiel der Erfindung dargestellt. Es zeigt:
- Fig. 1: eine rückwärtige, perspektivische Ansicht eines Fahrzeugs mit einem Rahmen,
- Fig. 2: eine rückwärtige, perspektivische Ansicht der Unterseite des Rahmens, der zwei miteinander verbundene Rahmenbereiche und eine mit einem der Rahmenbereiche verbundene Achseinheit aufweist,
- Fig. 3: eine Explosionsdarstellung der Unterseite der beiden Rahmenbereiche, wobei die rückwärtige Achseinheit von dem zweiten Rahmenbereich entfernt wurde,
- Fig. 4: eine rückwärtige, perspektivische Darstellung des Rahmens ähnlich Fig. 2 aber mit entfernter Achseinheit,
- Fig. 5: eine vergrößerte, schematische Ansicht, die eine teleskopische Verbindung der Rahmenbereiche sowie einen Stift zeigt, mittels dem die Achseinheit an dem zweiten Rahmenbereich angebracht ist,
- Fig. 6: eine vergrößerte Explosionsdarstellung des Stifts und eines zugeordneten Bereichs der Achseinheit,
- Fig. 7: eine perspektivische Ansicht entsprechend Fig. 6 in einem montierten Zustand,
- Fig. 8: eine Seitenansicht des Bereichs der Achseinheit, der mit den Rahmenteilen verbunden ist und
- Fig. 9: eine vergrößerte Frontansicht von Anbauplatten, durch die der Stift gestützt wird.

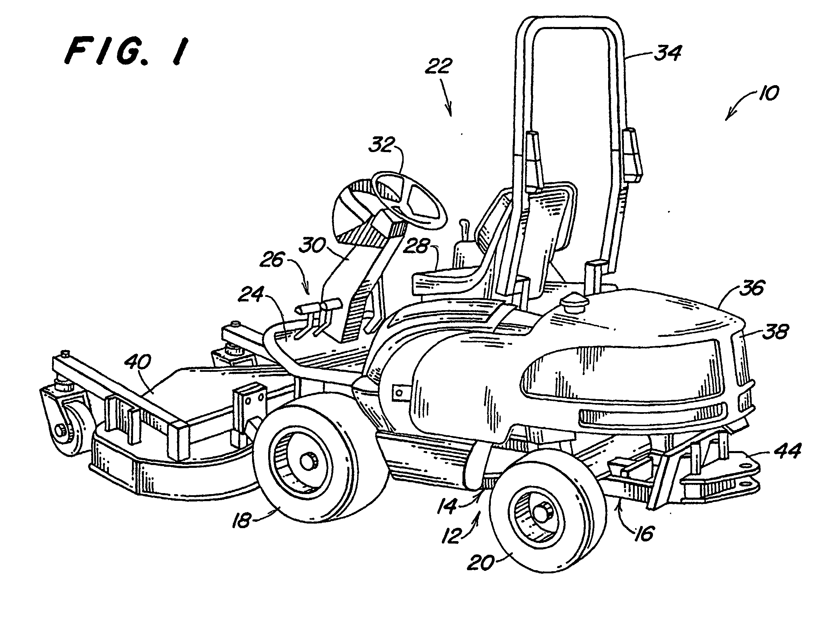

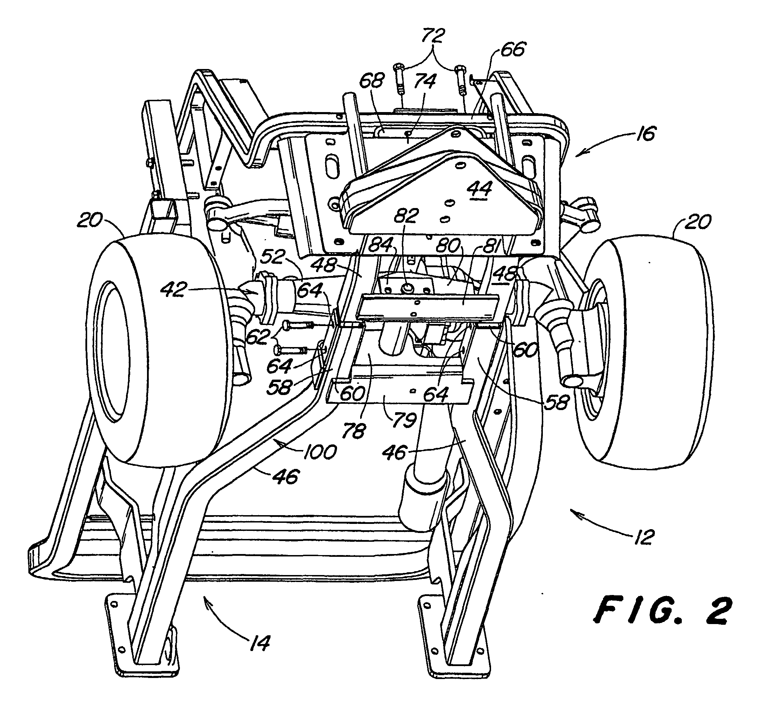

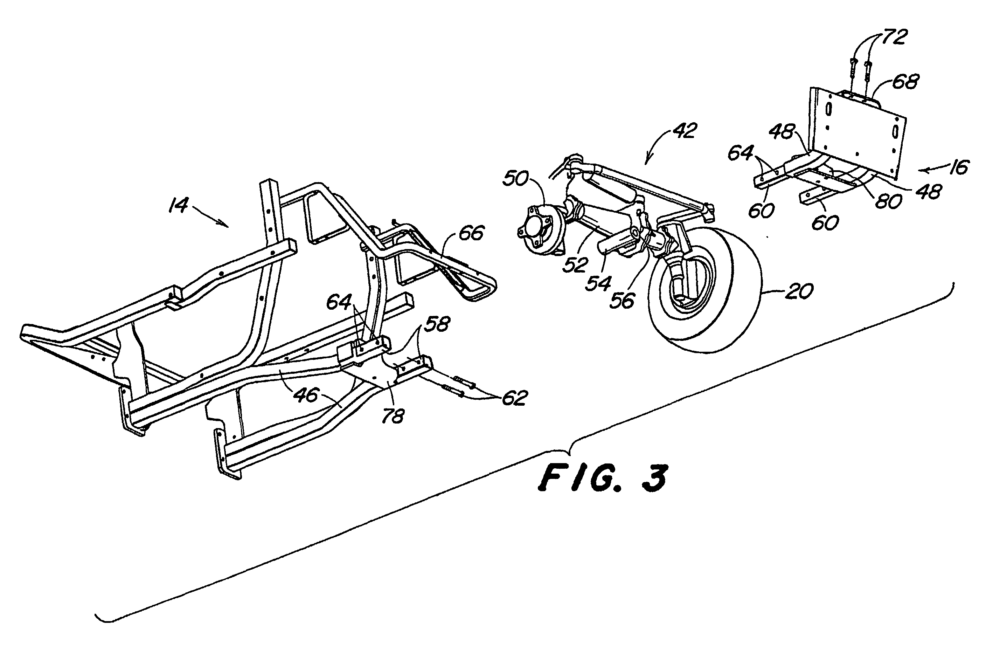

Es wird zuerst Figur 1 betrachtet, in der eine rückwärtige, erhöhte, perspektivische Ansicht eines Frontmähers bzw. eines Fahrzeugs 10 gezeigt wird, an dem die vorliegende Erfindung verwendet werden kann. Wie es in den Figuren 2 und 3 dargestellt ist, weist das Fahrzeug einen Rahmen 12 mit einem ersten oder vorderen Unterzusammenbau bzw. Rahmenbereich 14 und einem zweiten oder rückwärtigen Heckzusammenbau bzw. Rahmenbereich 16 auf. Die Rahmenbereiche 14 und 16 sind verbunden, um ein Paar vorderer, antreibbarer Räder 18 zu tragen. Am Heck des Rahmens 12 ist ein Paar lenkbarer Räder 20 angebracht. Der Rahmen 12 trägt weiter eine Bedienerplattform 22 an einem vorderen Ende des Fahrzeugs 10 mit einer Fußplattform 24, Pedalen 26, die sich durch die Fußplattform 24 erstrecken, einen Sitz 28 und eine nach oben stehende Lenksäule 30 mit einem Lenkrad 32. Rückwärts der Bedienerplattform 22 ist ein faltbarer Überschlagschutz 34 vorgesehen. Am Heck des Fahrzeugs 10 ist eine Abdeckung bzw. eine Haube 36 angeordnet, die einen Antrieb umschließt. Die Haube 36 ist mit Kühlungsund Vergaser-Lufteinlaßbereichen 38 auf jeder Seite ausgestattet. An dem vorderen Ende des Fahrzeugs 10 sind Tragarme angeordnet, an welche ein Mähwerk 40 angebracht ist.

Es wird nun auf Figur 2 Bezug genommen, in der eine schematische und rückwärtige, perspektivische Ansicht der Unterseite des Rahmens 12 gezeigt wird. In dieser Ansicht ist der erste Rahmenbereich 14 mit dem zweiten Rahmenbereich 16 verbunden und eine Achseinheit 42 ist an dem zweiten Rahmenbereich 16 angebracht. Die Achseinheit 42 trägt die lenkbaren, rückwärtigen Räder 20 an ihren äußeren Enden. Am Heck des zweiten Rahmenbereichs 16 ist eine Anhängeeinrichtung 44 vorgesehen.

Es wird nun auch Figur 3 betrachtet, in der eine Explosionsdarstellung der beiden Rahmenbereiche 14 und 16 mit der Achseinheit 42 gezeigt wird. Der erste Rahmenbereich 14 weist ein Paar sich in Längsrichtung erstreckender und seitlich beabstandeter erster Rahmenteile 46 auf, welche daran angepaßt sind, die vorderen, antreibbaren Räder 18, die in Figur 1 dargestellt sind, zu tragen. Sie sind auch daran angepaßt über diesen den Fahrzeugantrieb zu tragen.

Der zweite Rahmenbereich 16 weist ein Paar sich in Längsrichtung erstreckender und seitlich beabstandeter zweiter Rahmenteile 48 auf, welche daran angepaßt sind, die Achseinheit 42 zu tragen. Um die Achseinheit 42 besser zu illustrieren, ist das linke, rückwärtige Rad 20 von seiner Nabe 50 entfernt. Die Achseinheit 42, wie sie in Figur 3 dargestellt ist, weist ein Achsgehäuse 52 auf, das sich seitwärts erstreckt. Eine Anbaumanschette 54 ist als Teil des Achsgehäuses 52 gegossen. Die Anbaumanschette 54 weist eine Öffnung bzw. eine Aussparung 56 auf, die sich in Längsrichtung hindurch erstreckt, welche dazu dient, das Achsgehäuse 42 pendelnd an dem zweiten Rahmenbereich 16 zu lagern.

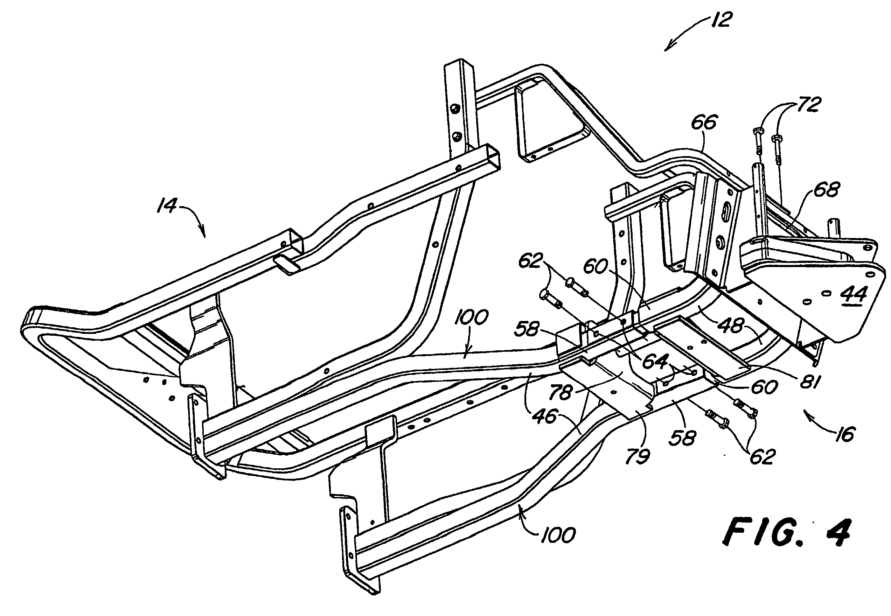

In der bevorzugten Ausführungsform, weisen die ersten und zweiten Rahmenteile 46 und 48 röhrenförmige Querschnitte auf. An ihren rückwärtigen Enden weisen die ersten Rahmenteile 46 teleskopische äußere Rahmenendbereiche 58 auf. An den vorderen Enden der zweiten Rahmenteile 48 des zweiten Rahmenbereichs 16 sind teleskopische innere Rahmenendbereiche 60 vorgesehen, die in den teleskopischen äußeren Rahmenendbereichen 58 des Frontzusammenbaus 46 entfernbar aufgenommen werden. Wie es in den Figuren 2, 4 und 5 dargestellt ist, können die teleskopischen inneren Rahmenendbereiche 60 in den teleskopischen, äußeren Rahmenendbereichen 58 aufgenommen werden, so daß Schrauben oder ähnliche Befestigungsmittel 62 durch die Öffnungen 64 eingesetzt werden können, die in den entsprechenden äußeren und inneren Rahmenendbereichen 58 und 60 vorgesehen sind, um sie zu verbinden.

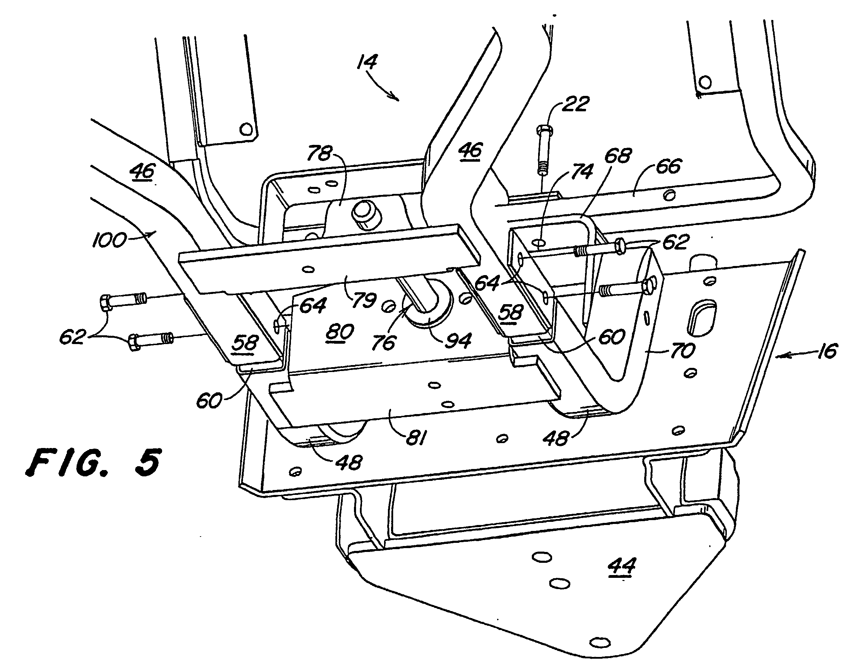

Um den oberen Bereich des zweiten Rahmenbereichs 16 mit dem ersten Rahmenbereich 14 zu verbinden, ist eine Querelement 66 an dem ersten Rahmenbereich 14 und eine Querstrebe 68 an dem zweiten Rahmenbereich 16 vorgesehen, wie es aus den Figuren 2, 3 und 5 ersehen werden kann. Die Querstrebe 68 ist mit hochstehenden Erweiterungen 70 des sich in Längsrichtung erstreckenden zweiten Rahmenteils 48 verbunden (siehe Figur 5), während sich das Querelement 66 an der Rückseite des ersten Frontzusammenbaus 14 sich an dessen rückwärtigem Ende quer erstreckt. Wenn der erste Rahmenbereich 14 und der zweite Rahmenbereich 16 miteinander verbunden sind, ist die Querstrebe 68 dem Querelement 66 benachbart angeordnet, siehe Figuren 2, 4 und 5, und Schrauben oder ähnliche Befestigungsmittel 72 sind in Öffnungen 74 in dem Querelement 66 und der Querstrebe 68 eingesetzt, um diese zu verbinden. Auf diese Weise werden nur sechs Schrauben bzw. Befestigungsmittel 72 benötigt, um die beiden Rahmenbereiche 14 und 16 zu verbinden.

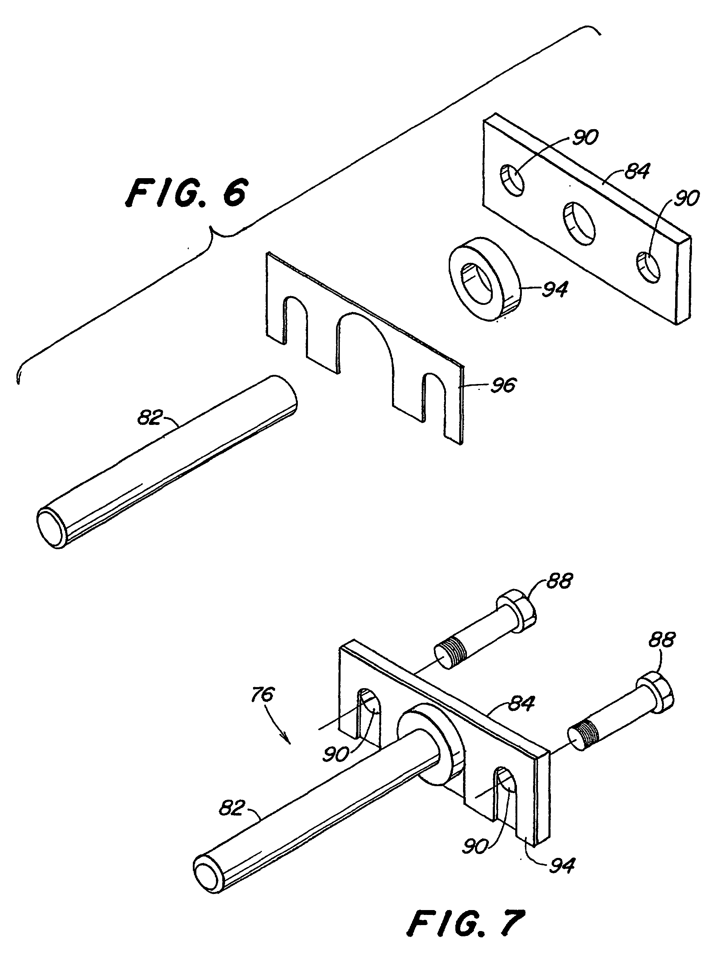

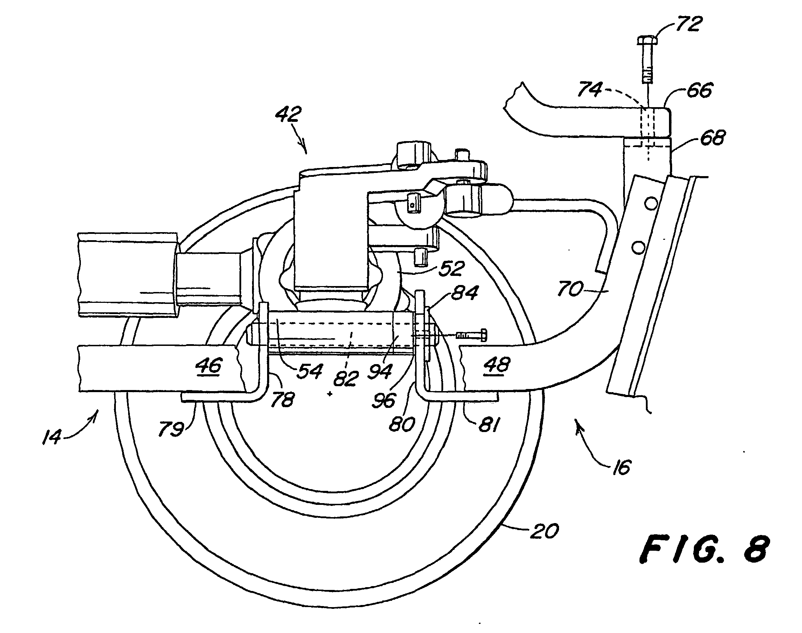

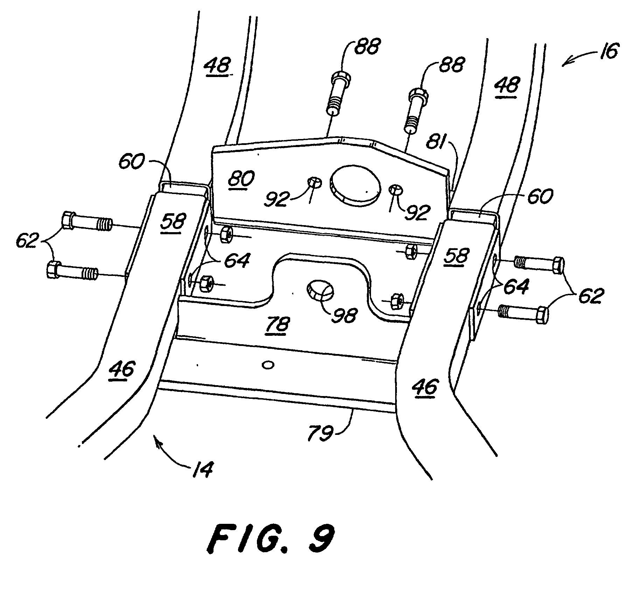

Es werden nun die Figuren 2, 5, 6, 7, 8 und 9 betrachtet, in denen die Struktur, die die Achseinheit 42 lösbar mit dem zweiten Rahmenbereich 16 verbindet, dargestellt wird. Diese Struktur weist eine Anbaumanschette 54, die mit der Achseinheit 42 verbunden ist, Stiftelement 76 und Anbauplatten 78 und 80 auf, die durch den ersten Rahmenbereich 14 und den zweiten Rahmenbereich 16 getragen werden. Jede dieser Anbauplatten 78 und 80 ist im allgemeinen L-förmig und weist untere Oberflächen 79 und 81 auf, die jeweils mit unteren Oberflächen 100 des Rahmens 12 verbunden sind. Die Stiftelemente 76, wie es in Figur 6 dargestellt ist, weisen einen Stift 82 auf, der durch Schweißen oder ähnliche Mittel mit einer Stiftplatte 84 verbunden ist (siehe Figur 7). Nachdem er mit der Stiftplatte 84 verbunden wurde, wird der Stift 82 in die Öffnung 86 der rückwärtigen Anbauplatte 80 eingesetzt (siehe Figuren 5 und 9) und Schrauben oder ähnliche Befestigungsmittel 94 werden in die Öffnungen 90 und 92 in der Stiftplatte 84 und der rückwärtigen Anbauplatte 80 entsprechend eingesetzt, um das Stiftelement 76 lose an der Anbauplatte 80 zu befestigen. Ein Abstandhalter 94 (siehe Figuren 6, 7 und 8) wird dann über den Stift 82 und in die Öffnung 86 in der rückwärtigen Anbauplatte 80 geschoben, um den Stift 82 in der Öffnung 86 zu zentrieren und zu halten. Eine Ausgleichsscheibe 96 wird dann zwischen die Stiftplatte 84 und die Anbauplatte 80 eingesetzt, um Fertigungsabweichungen auszugleichen. Die Befestigungsmittel 88 werden dann angezogen, um die Stiftelemente 76 mit der rückwärtigen Anbauplatte 80 zu verbinden. Als nächstes wird die Anbaumanschette 54, welche an der Achseinheit 42 vorgesehen ist, über den Stift 82 geschoben, um die Achseinheit 42 an dem zweiten Rahmenbereich 16 anzubringen. Der Heckzusammenbau 16 wird dann mit dem ersten Rahmenbereich 14 verbunden, indem die teleskopischen inneren Rahmenendbereiche 60 des zweiten Rahmenbereichs 16 in die teleskopischen äußeren Rahmenendbereiche 58 des ersten Rahmenbereichs 14 eingesetzt werden und das vordere Ende des Stiftelements 76 wird in eine Stützöffnung 98 der vorderen Anbauplatte 78 eingesetzt. Dann werden die Schrauben oder ähnlichen Befestigungsmittel 62 in die Öffnungen 64 der teleskopischen inneren und äußeren Rahmenendbereiche 60 und 58 eingesetzt, um diese miteinander zu verbinden. In ähnlicher Weise werden das Querelement 66 und die Querstrebe 68 mit Schrauben oder ähnlichen Befestigungsmitteln 72 verbunden, um den oberen Bereich des zweiten Rahmenbereichs 16 mit dem ersten Rahmenbereich 14 zu verbinden.

Mit den Befestigungsmitteln, die die ersten und zweiten Rahmenteile 46 und 48 und das Querelement 66 und die Querstrebe 68 miteinander verbinden, werden die Stiftelemente 76 durch die rückwärtigen und vorderen Anbauplatten 80 und 78 getragen (siehe Figur 5). Die lose Verbindung zwischen der Anbaumanschette 54 und dem Stift 82 erlaubt es der Achseinheit 42 um den Stift 82 zu schwenken, wenn die Untergrundkonturveränderungen auf gegenüberliegenden Seiten des Fahrzeugs 10 auftreten.

Ein Entfernen des zweiten Rahmenbereichs 16 von dem ersten Rahmenbereich 14 kann einfach ausgeführt werden, indem die vier Befestigungsmittel 62, die die Rahmenendbereiche 58 und 60 verbinden und die zwei Befestigungsmittel 72, die die Querstrebe 68 mit dem Querelement 66 verbinden, entfernt werden. Die Achseinheit 42 kann dann einfach von dem zweiten Rahmenbereich 16 entfernt werden, indem die Anbaumanschette 54 von dem Stift 82 geschoben wird.

Wenn die rückwärtige Achseinheit 42 oberhalb des Rahmens 12 befestigt ist, erstreckt sich kein Fahrzeugbaugruppe unter die untere sich horizontal in Längsrichtung erstreckende Oberflächen 100 des Rahmens 12. Entsprechend können diese Oberflächen 100 als eine Stütze dienen, die es dem Fahrzeug erlaubt durch einen Gabelstapler oder ein ähnliches Fahrzeug angehoben zu werden. Diese Fähigkeit kann die Durchführung von Reparaturen und/oder Wartungsarbeiten einfacher machen und erfordert weniger Ausrüstung, wie sie auch von besonderem Wert sein kann, wenn Wartungsarbeiten oder Reparaturen in Feldeinsatz ausgeführt werden müssen. Die saubere untere Oberfläche 100 des Rahmens 12 in Verbindung mit den unteren, flachen und im allgemeinen horizontalen Oberflächen 79 und 81 der Anbauplatten 78 und 80 dienen darüber hinaus als Gleitplatten, um die Fahrzeugbaugruppen vor Beschädigungen durch Hindernisse, die auf die Unterseite des Fahrzeugs 10 auftreffen, zu schützen.

Mit der vorliegenden Erfindung wird ein zweiteiliger Rahmenzusammenbau zur Verfügung gestellt, der es gestattet, daß der Schwerpunkt des Fahrzeugs nach unten verlegt wird und seine Stabilität an Steigungen erhöht wird. Darüber hinaus macht die geringe Anzahl von strukturellen Verbindungen, das heißt die sechs Befestigungsmittel, die angebracht oder entfernt werden müssen, um den zweiten Rahmenbereich 16 an dem ersten Rahmenbereich 14 anzubringen oder zu entfernen, Reparaturen und/oder ein Ersetzen der Achseinheit 42 zu einem schnellen und einfachen Vorgang. Die sauberen unteren Rahmenflächen erlauben es, das Fahrzeug 10 schnell für Wartungsarbeiten und/oder Reparaturen anzuheben, während sie die Fahrzeugbaugruppen ebenso vor unter ihnen hindurchgelangenden Hindernissen schützen.

## Patentansprüche

1. Landwirtschaftliches bzw. industrielles Fahrzeug (10) oder ein Fahrzeug (10) zur Rasen-, Garten- und Grundstückspflege mit einem Rahmen (12) und zumindest einem an dem Rahmen (12) vorgesehenen Paar vorzugsweise antreibbarer Räder (18), sowie mit einem Lager für wenigstens ein weiteres Rad bzw. eine Achseinheit (42), **dadurch gekennzeichnet, daß** der Rahmen (12) zumindest in einen ersten und einen zweiten Rahmenbereich (14, 16) trennbar ausgeführt ist und das Lager oberhalb eines der Rahmenbereiche (16) angeordnet ist.

2. Fahrzeug nach Anspruch 1, **dadurch gekennzeichnet, daß** der erste Rahmenbereich (14) und/oder der zweite Rahmenbereich (16) zumindest einen ersten und einen zweiten Rahmenteil (46, 48) aufweisen, die vorzugsweise seitlich beabstandet sind und/oder sich zumindest im wesentlichen in Längsrichtung erstrecken.

3. Fahrzeug nach Anspruch 2, **dadurch gekennzeichnet, daß** die Rahmenteile (46, 48) zumindest bereichsweise durch Hohlprofile gebildet werden.

4. Fahrzeug nach einem oder mehreren der vorherigen Ansprüche, **dadurch gekennzeichnet, daß** der erste Rahmenbereich (14) und/oder der zweite Rahmenbereich (16) eine zumindest im wesentlichen flache und/oder sich zumindest im wesentlichen horizontal erstreckende Unterseite aufweist.

5. Fahrzeug nach einem oder mehreren der vorherigen Ansprüche, **dadurch gekennzeichnet, daß** der erste Rahmenbereich (14) und der zweite Rahmenbereich (16) Mittel zur teleskopischen Verbindung der Rahmenteile (46, 48) aufweisen.

6. Fahrzeug nach Anspruch 5, **dadurch gekennzeichnet, daß** wenigstens einer der Rahmenteile (46, 48) eines der Rahmenbereiche (14, 16) in einem entsprechenden Rahmenteil (46, 48) des anderen Rahmenbereichs (14, 16) verschieblich aufnehmbar ist.

7. Fahrzeug nach einem oder mehreren der vorherigen Ansprüche, **dadurch gekennzeichnet, daß** die Achseinheit (42) an dem zweiten Rahmenbereich (16) schwenkbar vorgesehen ist.

8. Fahrzeug nach Anspruch 7, **dadurch gekennzeichnet, daß** an dem zweiten Ranmenbereich (16) ein Stift (82) vorgesehen ist, der mit einer Aussparung (56) in der Achseinheit (42) zur lösbaren Aufnahme des Lagers durch den zweiten Rahmenbereich (16) zusammenwirken kann.

9. Fahrzeug nach Anspruch 8, **dadurch gekennzeichnet, daß** der Stift (82) einen ersten Endbereich, der mit dem zweiten Rahmenbereich (16) verbunden ist, und einen zweiten Endbereich aufweist, der mit dem ersten Rahmenbereich (14) verbindbar ist.

## Claims

1. An agricultural or industrial vehicle (10) or a vehicle (10) for care of lawns, gardens and pieces of land, with a frame (12) and at least one pair of preferably drivable wheels (18) provided on the frame (12), as well as a bearing for at least one further wheel or an axle unit (42), **characterized in that** the frame (12) is made separable into at least first and second frame sections (14, 16) and the bearing is arranged above one of the frame sections (16).

2. A vehicle according to claim 1, **characterized in that** the first frame section (14) and/or the second frame section (16) comprise at least one first and one second frame part (46, 48), which are preferably laterally spaced and/or extend at least essentially in the longitudinal direction.

3. A vehicle according to claim 2, **characterized in that** the frame parts (46, 48) are formed at least in sections by hollow profiles.

4. A vehicle according to one or more of the preceding claims, **characterized in that** the first frame section (14) and/or the second frame section (16) has an underside which is at least essentially flat and/or extends substantially horizontally.

5. A vehicle according to one or more of the preceding claims, **characterized in that** the first frame section (14) and the second frame section (16) comprise means for telescopic connection of the frame parts (46, 48).

6. A vehicle according to claim 5, **characterized in that** at least one of the frame parts (46,48) of one of the frame sections (14, 16) can be received slidably in a corresponding frame part (46, 48) of the other frame section (14,16).

7. A vehicle according to one or more of the preceding claims, **characterized in that** the axle unit (42) is pivotally arranged on the second frame section (16).

8. A vehicle according to claim 7, **characterized in that** a pin (82) is provided on the second frame section (16) which can cooperate with a recess (56) in the axle unit (42) for releasable reception of the bearing by the second frame section (16).

9. A vehicle according to claim 8, **characterized in that** the pin (82) has a first end section which is connected to the second frame section (16) and a second end section, which can be connected to the first frame section (14).

## Revendications

1. Véhicule agricole ou industriel (10) ou un véhicule (10) destiné à l'entretien des pelouses, des jardins et des terrains, comprenant un châssis (12) et au moins une paire de roues (18), de préférence motrices, prévues contre le châssis (12), ainsi qu'un support pour au moins une roue supplémentaire, plus précisément une unité d'essieu (42), **caractérisé en ce que** le châssis (12) est conçu de manière séparable au moins dans une première et une deuxième partie de châssis (14, 16) et le support est disposé au-dessus de l'une des parties de châssis (16).

2. Véhicule selon la revendication 1, **caractérisé en ce que** la première partie de châssis (14) et/ou la deuxième partie de châssis (16) comportent au moins un premier et un deuxième élément de châssis (46, 48), qui, de préférence, sont écartés latéralement et/ou s'étendent au moins sensiblement dans le sens longitudinal.

3. Véhicule selon la revendication 2, **caractérisé en ce que** les éléments de châssis (46, 48) sont formés au moins dans certaines parties par des profilés creux.

4. Véhicule selon une ou plusieurs des revendications précédentes, **caractérisé en ce que** la première partie de châssis (14) et/ou la deuxième partie de châssis (16) sont munies d'un côté inférieur au moins sensiblement plat et/ou s'étendant au moins sensiblement dans le sens horizontal.

5. Véhicule selon une ou plusieurs des revendications précédentes, **caractérisé en ce que** la première partie de châssis (14) et la deuxième partie de châssis (16) sont munies de moyens pour un assemblage télescopique des éléments de châssis (46, 48) .

6. Véhicule selon la revendication 5, **caractérisé en ce qu'**au moins l'un des éléments de châssis (46, 48) de l'une des parties de châssis (14, 16) peut être logé de manière coulissante dans un élément de châssis (46, 48) correspondant de l'autre partie de châssis (14, 16).

7. Véhicule selon une ou plusieurs des revendications précédentes, **caractérisé en ce que** l'unité d'essieu (42) est prévue de manière pivotante contre la deuxième partie de châssis (16).

8. Véhicule selon la revendication 7, **caractérisé en ce qu'**il est prévu contre la deuxième partie de châssis (16) une broche (82), qui peut coopérer avec un évidement (56) dans l'unité d'essieu (42) pour une réception amovible du support par la deuxième partie de châssis (16).

9. Véhicule selon la revendication 8, **caractérisé en ce que** la broche (82) comporte une première extrémité, qui est assemblée avec la deuxième partie de châssis (16), et une deuxième extrémité, qui peut être assemblée avec la première partie de châssis (14).
